# EUROPEAN PATENT APPLICATION

(11) **EP 2 040 369 A2**
(43) Date of publication of application: **25.03.2009**
(21) Application number: 08104825.8
(22) Date of filing: 22.07.2008
(51) Int. Cl.: H02P 7/00

(54) **Load drive control circuit**

(30) Priority: 25.07.2007 JP 2007193761
(71) Applicant: KABUSHIKI KAISHA TOKAI RIKA DENKI SEISAKUSHO, Niwa-gun, Aichi-ken 480-0195 (JP)
(72) Inventor: Chikazawa, Satoshi, KK Tokai Rika Denki, Niwa-gun, Aichi 480-0195 (JP); Nagao, Takashi, KK Tokai Rika Denki, Niwa-gun, Aichi 480-0195 (JP); Uruno, Satoki, KK Tokai Rika Denki, Niwa-gun, Aichi 480-0195 (JP); Nishibe, Yasushi, KK Tokai Rika Denki, Niwa-gun, Aichi 480-0195 (JP)
(74) Representative: Skuhra, Udo

(57) **Abstract**

A load drive control circuit (8) includes a drive circuit (10) for driving a load. A control circuit (9), connected to the drive circuit by diagnostic lines (L3a - L3d), provides the drive circuit with a control command (S1) that specifies an operation state. The drive circuit drives the load in the operation state specified by the control command, generates a diagnostic output (Sk1, Sk2) including diagnostic notification signals (S3a - S3d) each having an H level or an L level, and provides the diagnostic notification signals of the diagnostic output to the control circuit. A signal output unit (36) outputs first and second diagnostic outputs respectively in response to the first and second control command from the control circuit. A diagnostic line failure determination unit (37) checks whether the first and second diagnostic outputs are both normal to determine whether the diagnostic lines includes a failure or not.

## Description

The present invention relates to a load drive control circuit for controlling and driving a load such as a motor, a light, or the like.

Conventionally, a motor drive circuit is used to drive a motor. Japanese Laid-Open Patent Publication No. 2006-158162 describes an H-bridge motor drive circuit. Fig. 8 shows an H-bridge motor drive circuit 81. The motor drive circuit 81 includes a system control circuit 82 and a drive control circuit 84, which drives and controls a motor 83 according to a control command received from the system control circuit 82.

The system control circuit 82 is connected to the drive control circuit 84 by a plurality of signal lines Ls (Ls1, Ls2, ..., Lsk). The signal line Ls includes motor control lines Ls1 and Ls2 and an operation control line Lsk. The motor control lines Ls1 and Ls2 are signal paths for a command (also referred to as motor control command Sa) that is output from the system control circuit 82 to the drive control circuit 84 to specify a state of the motor 83 (forward rotation, reverse rotation, stop). The operation control line Lsk is a signal path for a command (also referred to as operation control command Skk) output from the system control circuit 82 to the drive control circuit 84 to specify a state (stop, activation) of the drive control circuit 84.

The system control circuit 82 includes two output terminals, namely, a Ca1 terminal 82a and a Cb1 terminal 82b. The drive control circuit 84 includes two input terminals, namely, an A1 terminal 85 and a B1 terminal 86. The first motor control line Ls1 is connected to the Ca1 terminal 82a and the A1 terminal 85. The second motor control line Ls2 is connected to the Cb1 terminal 82b and the B1 terminal 86.

The motor control signals Sa (Sa1 and Sa2) output from the Ca1 terminal 82a and the Cb1 terminal 82b of the system control circuit 82 are provided to the A1 terminal 85 and the B1 terminal 86 of the drive control circuit 84, respectively.

The drive control circuit 84 includes two output terminals, namely, an X1 terminal 87 and a Y1 terminal 88. The X1 terminal 87 is connected to a first motor terminal of the motor 83, and the Y1 terminal 88 is connected to a second motor terminal of the motor 83. The drive control circuit 84 drives the motor 83 according to the motor control command Sa received from the system control circuit 82 via the motor control lines Ls1 and Ls2.

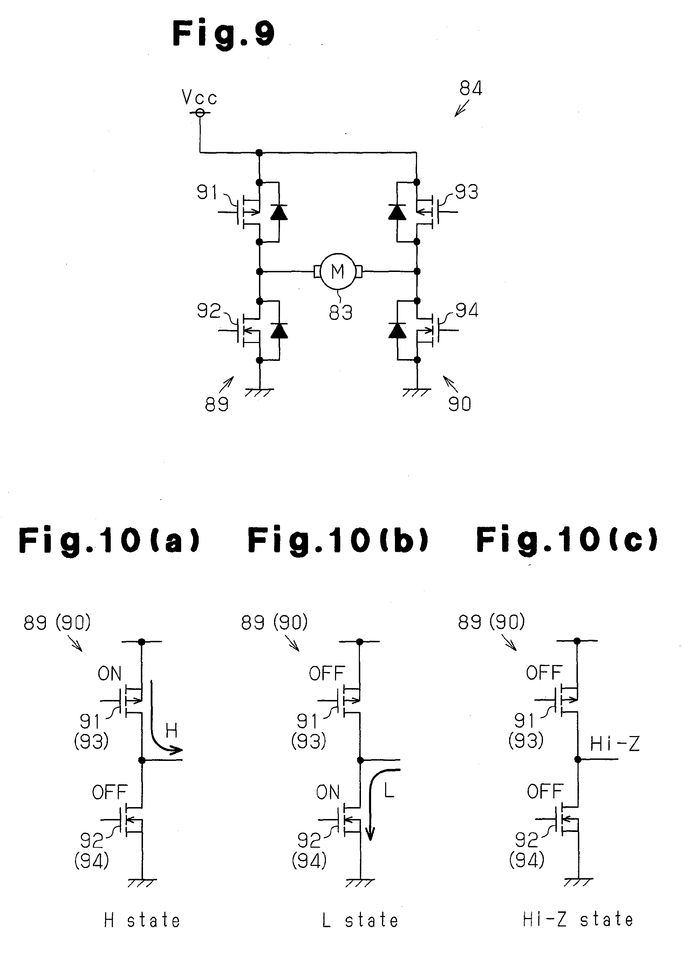

As shown in Fig. 9, the drive control circuit 84 includes a first bridge circuit 89 and a second bridge circuit 90. The first bridge circuit 89 includes two transistors 91 and 92, which are connected in series. The gate terminals of the transistors 91 and 92 are connected to the A1 terminal 85 and the B1 terminal 86, respectively. The output terminal of the first bridge circuit 89 is an intermediate terminal between the transistors 91 and 92. The intermediate terminal is connected to the X1 terminal 87 (first motor terminal) of the motor 83. The second bridge circuit 90 includes two transistors 93 and 94 connected in series. The gate terminals of the transistors 93 and 94 are connected to the A1 terminal 85 and the B1 terminal 86, respectively. The output terminal of the second bridge circuit 90 is an intermediate terminal between the transistors 93 and 94. The intermediate terminal is connected to the Y1 terminal 88 (second motor terminal).

As shown in Fig. 10(a), the potential at the output terminal of the first bridge circuit 89 is at a high potential when the transistor 91 on the power supply Vcc side is activated and the transistor 92 on the GND side is deactivated. Such a state is also referred to as the bridge output of the first bridge circuit 89 being in an H state. As shown in Fig. 10(b), the potential at the output terminal of the first bridge circuit 89 is a low potential (bridge output is in an L state) when the transistor 91 is deactivated and the transistor 92 is activated. As shown in Fig. 10(c), the first bridge circuit 89 is in a high impedance state (Hi-Z state) when the two transistors 91 and 92 are both deactivated. The operation of the second bridge circuit 90 is the same as the first bridge circuit 89.

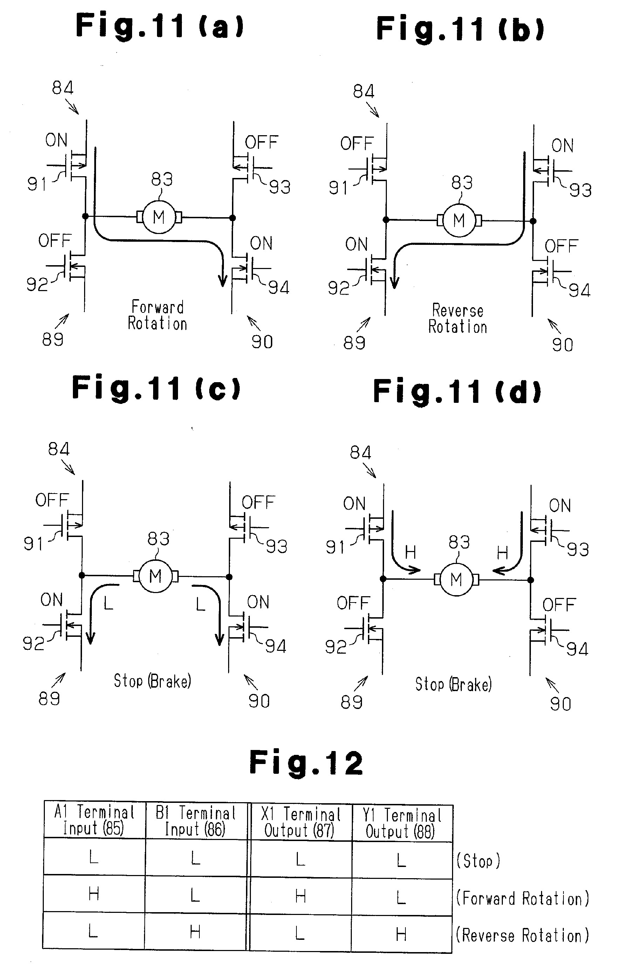

In Fig. 11(a), the first bridge circuit 89 is in an H state and the second bridge circuit 90 is in an L state. In this case, current flows from the activated transistor of the first bridge circuit 89 towards the activated transistor of the second bridge circuit 90. As a result, the motor 83 is driven to produce forward rotation. In Fig. 11(b), the first bridge circuit 89 is in an L state and the second bridge circuit 90 is in an H state. In this case, current flows from the activated transistor of the second bridge circuit 90 towards the activated transistor of the first bridge circuit 89. As a result, the motor 83 is driven to produce reverse rotation.

When stopping rotation produced by the motor 83, the motor drive circuit 81 is switched to a brake mode as shown by the states of Figs. 11(c) and 11(d). In the brake mode of Fig. 11(c), the two bridge circuits 89 and 90 are both in an L state. In the brake mode of Fig. 11(d), the two bridge circuits 89 and 90 are both in an H state.

The system control circuit 82 provides the operation control command Skk to the drive control circuit 84 via the operation control line Lsk to shift the drive control circuit 84 from a stopped state to an operation state. Then, the system control circuit 82 provides the motor control command signals Sa1 and Sa2 to the drive control circuit 84 via the motor control lines Ls1 and Ls2. The system control circuit 82 controls the motor 83 by way of the drive control circuit 84 in this manner. In the drive control circuit 84, the outputs of the first bridge circuit 89 and the second bridge circuit 90 are switched according to the signal combination of the motor control command signals Sa1 and Sa2 having a high (H) level and received from the system control circuit 82 via the first motor control line Ls1 and the second motor control line Ls2. The motor 83 is driven and controlled according to the output of the first bridge circuit 89 and the second bridge circuit 90.

When stopping the motor 83, the system control circuit 82 outputs the low (L) level signals Sa1 and Sa2, as the motor control command Sa, to the drive control circuit 84 via the motor control lines Ls1 and LS2, respectively (see Fig. 12). The two bridge circuits 89 and 90 both enter the L state according to the motor control command Sa, and the combination of the output of the X1 terminal 87 and the output of the Y1 terminal 88 of the drive control circuit 84 becomes L and L. In this case, current does not flow to the motor 83 and the motor 83 stops operating, as shown in Fig. 11(c).

When producing forward rotation with the motor 83, the system control circuit 82 outputs the H level signal Sa1 and the L level signal Sa2, as the motor control command Sa, to the drive control circuit 84 via the motor control lines Ls1 and Ls2, respectively. The first bridge circuit 89 enters the H state, and the second bridge circuit 90 enters the L state according to the motor control command Sa. The combination of the output of the X1 terminal 87 and the output of the Y1 terminal 88 of the drive control circuit 84 becomes H and L. In this case, current flows from the activated transistor of the first bridge circuit 89 in the H state towards the activated transistor of the second bridge circuit 90 in the L state, and the motor 83 produces forward rotation, as shown in Fig. 11(a).

When producing reverse rotation with the motor 83, the system control circuit 82 outputs the L level signal Sa1 and the H level signal Sa2 to the drive control circuit 84 via the motor control lines Ls1 and Ls2, respectively, as the motor control command Sa. The first bridge circuit 89 enters the L state, and the second bridge circuit 90 enters the H state according to the motor control command Sa. The combination of the output of the X1 terminal 87 and the output of the Y1 terminal 88 of the drive control circuit 84 becomes L and H. In this case, current flows from the activated transistor of the second bridge circuit 90 in the H state towards the activated transistor of the first bridge circuit 89 in the L state, and the motor 83 produces reverse rotation, as shown in Fig. 11(b).

Depending on the environment in which the motor drive circuit 81 is used, the motor terminal may be shortcircuited to a high potential point or the ground. As a result, overcurrent may flow to the drive control circuit 84 and heat or damage the drive control circuit 84. Thus, the motor drive circuit 81 can be provided with a protection function for protecting the drive control circuit 84 when the drive control circuit 84 (motor drive circuit 81) enters an abnormal state. A diagnostic line 95 for monitoring whether or not the drive control circuit 84 is in the abnormal state is arranged between the system control circuit 82 and the drive control circuit 84. The diagnostic line 95 is connected to a diagnosis terminal 96 of the system control circuit 82 and a diagnosis terminal 97 of the drive control circuit 84.

The protection function will now be described. The drive control circuit 84 monitors the amount of current flowing in the drive control circuit 84. When the drive control circuit 84 recognizes an abnormal circuit state based on a current increase, the drive control circuit 84 outputs a wiring abnormality notification Sng1 to the system control circuit 82 via the diagnostic line 95. When receiving the wiring abnormality notification Sng1, the system control circuit 82, for example, forcibly ends the output of the motor control command to the drive control circuit 84 and prevents the motor drive circuit 81 from being continuously driven in an abnormal state.

However, in the same manner as the motor control lines Ls1 and Ls2, the diagnostic line system including the diagnostic line 95 and the diagnosis terminals 96 and 97 may not function properly due to wiring failure as a result of wear or the environment the motor drive circuit 81 is used in. If the diagnostic line 95 fails to function properly, the wiring abnormality notification Sng1 from the drive control circuit 84 is not normally transmitted to the system control circuit 82, and the system control circuit 82 cannot implement the protection function.

It is an object of the present invention to provide a load drive control circuit that prevents or reduces erroneous operations of a load when an abnormality occurs in a diagnosis system.

One aspect of the present invention is a load drive control circuit for use with a load. The load drive circuit includes a drive circuit for connection to the load for driving the load. A control circuit, connected to the drive circuit by a plurality of diagnostic lines, provides the drive circuit with a control command that specifies an operation state of the drive circuit. The drive circuit has a plurality of operation states including a first operation state and a second operation state. The control command includes a first control command for specifying the first operation state and a second control command for specifying the second operation state. The drive circuit drives the load in the operation state specified by the control command. The drive circuit generates a diagnostic output including a plurality of diagnostic notification signals each having an H level or an L level, and provides the plurality of diagnostic notification signals of the diagnostic output to the control circuit via the plurality of diagnostic lines. The control circuit, when receiving a diagnostic output indicating abnormality of the drive circuit from the drive circuit, performs an operation corresponding to the abnormality. A signal output unit outputs a first diagnostic output and a second diagnostic output respectively in response to the first control command and the second control command from the control circuit. The plurality of diagnostic notification signals all have H levels in either one of the first and second diagnostic outputs and the plurality of diagnostic notification signals all have L levels in the other one of the first and second diagnostic output. A determination unit checks whether the first diagnostic output provided from the signal output unit when the drive circuit is in the first operation state and the second diagnostic output provided from the signal output unit when the drive circuit is in the second operation state are both normal to determine whether the plurality of diagnostic lines includes a failure or not.

Other aspects and advantages of the present invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a perspective view of a vehicle including a door mirror adopting a motor drive circuit according to a preferred embodiment of the present invention;
Fig. 2 is a block diagram of the motor drive circuit that changes the orientation of a mirror surface of the door mirror in the preferred embodiment of the present invention;
Fig. 3 is a circuit diagram of a drive control circuit in the motor drive circuit of Fig. 2;
Fig. 4(a) to (e) show various states of the drive control circuit of Fig. 3;
Fig. 5 is a table showing a terminal input, a terminal output, and operation of the drive control circuit of Fig. 3;
Fig. 6 is a graph showing the relationship between drive current and drive voltage generated in the drive control circuit;
Fig. 7 is a comparison table illustrating the contents of processing performed when determining diagnostic line failure;
Fig. 8 is a block diagram of a motor drive circuit in the prior art;
Fig. 9 is a circuit diagram of an H-bridge motor drive circuit in the prior art;
Figs. 10(a) to 10(c) respectively show an H state, an L state, and an Hi-Z state of a bridge circuit in the motor drive circuit of Fig. 9;
Figs. 11(a) to (d) show various operations of the motor drive circuit shown in Fig. 9; and
Fig. 12 is a table showing a terminal input and a terminal output of the drive control circuit.

Generally, a drive circuit enters a first operation state in accordance with a first control command from the control circuit. The drive circuit enters a second operation state in accordance with a second control command. The drive circuit monitors its own operation state, and notifies a control circuit of an abnormality via a diagnostic line when detecting an abnormal state such as when overcurrent flows. The control circuit performs a corresponding operation in response to the notification. In a typical load drive control circuit having such a structure, if one or more diagnostic lines connecting the drive circuit and the control circuit fails to function properly, a signal flowing through such a diagnostic line may become fixed in an active state (e.g., H level) or an inactive state (e.g., L level) irrespective of the operation state of the drive circuit. Notification of an abnormality of the drive circuit cannot be accurately provided from the drive circuit to the control circuit if the diagnostic line fails to function properly. An erroneous diagnostic output may be output in a situation in the diagnostic line fails to function properly, and the control circuit may perform an erroneous operation in accordance with the erroneous diagnostic output. Accordingly, in a preferred embodiment of the present invention, the plurality of diagnostic lines are each tested to check whether or not they can be shifted to both an H state and an L state in order to determined whether or not the diagnostic lines are functioning properly. This prevents a situation in which a load is driven and controlled when the diagnostic lines are not functioning properly. Thus, unintended operations of the load that would be caused by such a failure of the diagnostic line do not occur.

In the preferred embodiment, failure of a diagnostic line is determined based on a first diagnostic output and a second diagnostic output. The first diagnostic output corresponds to a state before the drive circuit actually drives a load as in a sleep mode. This state is referred to as a first operation state. The second diagnostic output also corresponds to a state before the drive circuit actually drives the load but is after the first operation state as in a standby mode. The determination result of a diagnostic line failure is obtained at the point or time when the drive circuit actually drives and controls the load. Thus, a situation in which a load is driven and controlled by an abnormal diagnostic line does not occur.

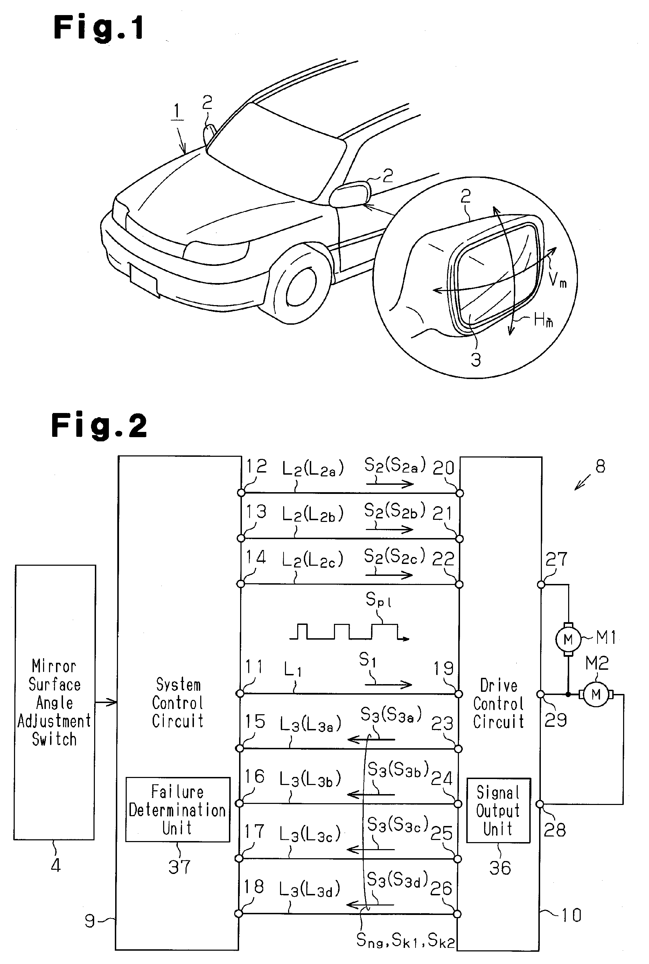

A load drive control circuit according to a preferred embodiment of the present invention will be described below with reference to Fig. 1 to Fig. 7.

As shown in Fig. 1, in a vehicle 1, a door mirror 2 (side mirror) is arranged on a door located next to the driver's seat and a door located next to the front passenger's seat. Each door mirror 2 has a mirror surface 3. The mirror surface 3 can be tilted in four directions, upward, downward, leftward, and rightward directions (see two-headed arrows Vm and Hm in Fig. 1). Drive sources such as motors M1 and M2 are operated in accordance with an operation direction and an operation amount of a mirror surface angle adjustment switch 4 (Fig. 2), which is located in the passenger compartment, to change the orientation of the mirror surface 3. The motors M1 and M2 are examples of a load.

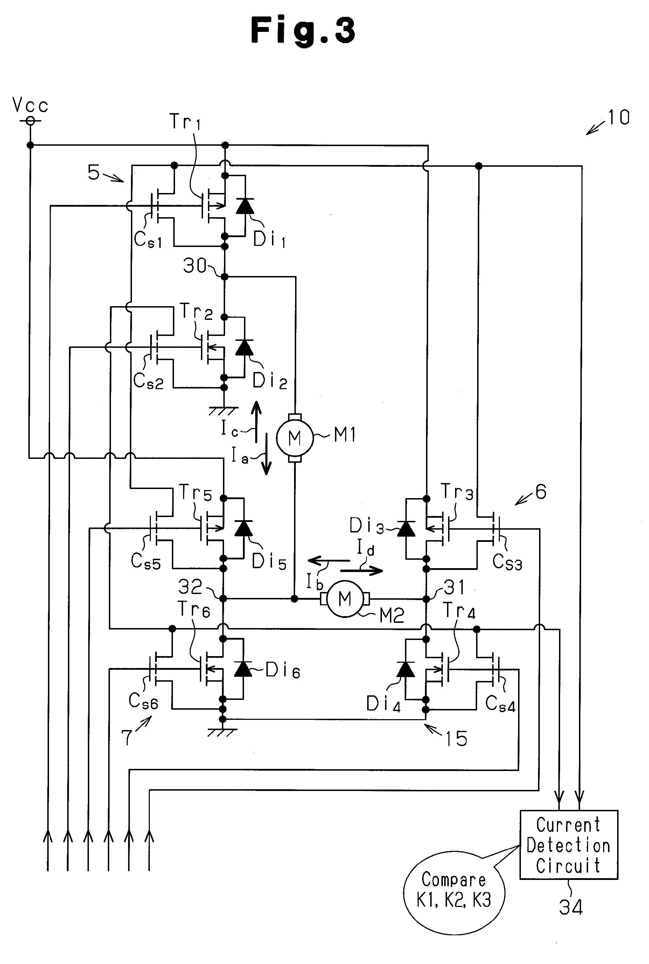

A drive mechanism for changing the orientation of the mirror surface 3 is arranged in the door mirror 2. Non-limited example of the drive mechanism is a three-bridge motor drive circuit 8 for driving the two motors M1 and M2 as shown in Fig. 2. The motor drive circuit 8 may include three bridge circuits 5, 6, and 7 (see Fig. 3). One (e.g., bridge circuit 5) of the three bridge circuits 5, 6, and 7 is used as a bridge circuit for the first motor M1, another bridge circuit (e.g., bridge circuit 6) is used as a bridge circuit for the second motor M2, and the remaining one bridge circuit (e.g., bridge circuit 7) is used as a bridge circuit commonly shared by the two motors M1 and M2. The motor drive circuit 8 is non-limited example of the load drive control circuit.

The motor drive circuit 8 includes a system control circuit 9, which generates and outputs various control commands, and a drive control circuit 10, which drives the two motors M1 and M2 in response to various control commands from the system control circuit 9. The system control circuit 9 is an IC unit including a CPU, ROM, RAM, and the like. The system control circuit 9 controls the orientation of the mirror surface 3 of the door mirror 2. The drive control circuit 10 includes switching elements such as a transistor. Each switching element of the drive control circuit 10 is activated or deactivated based on the control command from the system control circuit 9. The states of the motors M1 and M2 are changed according to the combination of activated and deactivated switching elements in the drive control circuit 10. The system control circuit 9 is non-limited example of a control circuit. The drive control circuit 10 is non-limited example of a drive circuit.

The system control circuit 9 is connected to the drive control circuit 10 by an operation control line L1, motor control lines L2 (L2a, L2b, L2c, ...), and diagnostic lines L3 (L3a, L3b, L3c, L3d, ...).

The system control circuit 9 generates an activation command (also referred to as the operation control command S1) that specifies the operation state of the drive control circuit 10 (activation, actual drive), and outputs the command to the drive control circuit 10 via the operation control line L1. The system control circuit 9 generates an operation command (also referred to as motor control command S2) that specifies the state of the rotation produced by the motors M1 and M2 (forward rotation, reverse rotation, stop) and outputs the command to the drive control circuit 10 via a plurality of motor control lines L2 (L2a, L2b, and L2c) in accordance with a parallel communication scheme. When recognizing an abnormality in the input signal, the drive control circuit 10 transmits a diagnosis notification S3 indicating such an abnormality to the system control circuit 9 via the diagnostic lines L3 (L3a, L3b, L3c, and L3d). The operation control command S1 is non-limited example of a control command. The motor control command S2 is non-limited example of a control command (load control command).

The system control circuit 9 includes an output terminal, that is, a mode terminal 11 of the operation control command S1. The mode terminal 11 is connected to the operation control line L1. The system control circuit 9 includes a plurality of (three in the present example) output terminals for the motor control command S2, that is, Ca terminal 12, Cb terminal 13, and Cc terminal 14. The Ca terminal 12 is connected to the first motor control line L2a. The Cb terminal 13 is connected to the second motor control line L2b. The Cc terminal 14 is connected to the third motor control line L2c. The system control circuit 9 includes a plurality of (four in this example) diagnosis terminals 15, 16, 17, and 18 as input terminals for the diagnosis notification S3. The M1 diagnosis terminal 15 is connected to the first diagnostic line L3a. The M2 diagnosis terminal 16 is connected to the second diagnostic line L3b. The M3 diagnosis terminal 17 is connected to the third diagnostic line L3c. The M4 diagnosis terminal 18 is connected to the fourth diagnostic line L3d.

The operation control command S1 is input from the system control circuit 9 to an input terminal, that is, a mode terminal 19 of the drive control circuit 10 via the operation control line L1. The motor control command signals S2a, S2b, and S2c forming the motor control command S2 are input from the system control circuit 9 to the plurality of input terminals of the drive control circuit 10, that is, A terminal 20, B terminal 21, and C terminal 22, respectively. The A terminal 20 is connected to the first motor control line L2a. The B terminal 21 is connected to the second motor control line L2b. The C terminal 22 is connected to the third motor control line L2c. The diagnosis notification signals S3a, S3b, S3c, and S3d forming the diagnosis notification S3 are respectively output from the diagnosis terminals 23, 24, 25, 26 of the drive control circuit 10. The K1 diagnosis terminal 23 is connected to the first diagnostic line L3a. The K2 diagnosis terminal 24 is connected to the second diagnostic line L3b. The K3 diagnosis terminal 25 is connected to the third diagnostic line L3c. The K4 diagnosis terminal 26 is connected to the fourth diagnostic line L3d. The drive control circuit 10 includes an X terminal 27, a Y terminal 28, and a COM terminal 29. The X terminal 27 is connected to a first motor terminal of the first motor M1. The Y terminal 28 is connected to a first motor terminal of the second motor M2. The COM terminal 29 is connected to the second motor terminals of the two motors M1 and M2.

The system control circuit 9 and the drive control circuit 10 may enter a power supply shutdown state in which they are electrically disconnected from an in-vehicle battery. When the system control circuit 9 that is in the power supply shutdown state is activated, the system control circuit 9 outputs an activation request serving as the operation control command S1 to the drive control circuit 10, which is in the power supply shutdown state. The drive control circuit 10 is activated in response to the activation request from the system control circuit 9 and performs an initialization operation. The system control circuit 9 constantly outputs the activation request to the drive control circuit 10 when supplied with power. However, the initialization operation of the drive control circuit 10 is performed only once when receiving the activation request. After completing the initialization operation, the drive control circuit 10 enters a sleep mode (hibernation state) until receiving any of various commands from the system control circuit 9. The operation control command S1 is non-limited example of the control command for shifting the drive control circuit 10 to the first state. Situations in which the system control circuit 9 is disconnected from the power supply includes a case in which battery capacity of the in-vehicle battery is insufficient or empty, and a case in which a wiring connecting the in-vehicle battery and the system control circuit 9 is cut.

When an engine start switch is switched to an OFF position, the system control circuit 9 outputs the operation control command S1 to shift the drive control circuit 10 to the sleep mode. In response to the command, the drive control circuit 10 performs the sleep operation and shifts to the sleep mode. The operation control command S1 is non-limited example of a control command for shifting the drive control circuit 10 to the first state.

When the engine start switch is switched to an accessory (ACC) position or an ignition (IG) position, the system control circuit 9 outputs a standby request (command to start the standby operation) to the drive control circuit 10 via the operation control line L1 as the operation control command S1 to shift the drive control circuit 10 from the sleep mode (hibernation state) to the standby mode. When the drive control circuit 10 in the sleep mode receives the standby request from the system control circuit 9, the drive control circuit 10 executes the standby operation and shifts to the standby mode to wait for the motor control command S1 from the system control circuit 9. If the system control circuit 9 detects the operation of the mirror surface angle adjustment switch 4 when the drive control circuit 10 is in the standby mode, the system control circuit 9 outputs the motor control command signals S2a, S2b, and S2c (notification of actual drive) corresponding to the switch operation to the drive control circuit 10 via the motor control lines L2a, L2b, and L2c. The drive control circuit 10 stops operation, produces forward rotation, or produces reverse rotation with the two motors M1 and M2 in response to the motor control command signals S2a, S2b, and S2c. The operation control command S1 that instructs shifting from the sleep mode to the standby mode is non-limited example of a control command for shifting the drive control circuit 10 to the second state after the first state.

When the engine start switch is at the ACC position or the IG position, and a predetermined period elapses in which the mirror surface angle adjustment switch 4 is not operated, the system control circuit 9 may output the operation control command S1 for shifting to the sleep mode to the drive control circuit 10. The operation control command S1 is non-limited example of a control command for shifting the drive control circuit 10 to the first state.

In the sleep mode, the drive control circuit 10 is not activated, and the motors M1 and M2 are not driven. In the standby mode, the drive control circuit 10 is activated but the motors M1 and M2 are not driven, and the drive control circuit is waiting for commands from the system control circuit 9.

As shown in Fig. 3, the drive control circuit 10 includes a Vout bridge circuit 5, a Hout bridge circuit 6, and a COM bridge circuit 7.

The Vout bridge circuit 5 includes two transistors T1, Tr2 connected in series. A node between the transistors Tr1 and Tr2 forms an output terminal 30 of the Vout bridge circuit 5. The output terminal 30 of the Vout bridge circuit 5 is connected to the first motor terminal of the first motor M1. The transistors Tr1 and Tr2 are each a field effect transistor (FET) or the like. The transistor Tr1 may be referred to as a power supply (Vcc) side transistor. The transistor Tr2 may be referred to as a ground (GND) side transistor. The source terminal of the transistor Tr1 is connected to the power supply Vcc, the drain terminal of the transistor Tr1 is connected to the drain terminal of the transistor Tr1, and the gate terminal of the transistor Tr1 is connected to the input terminal side of the drive control circuit 10. The source terminal of the transistor Tr2 is connected to the GND, and the gate terminal of the transistor Tr2 is connected to the input terminal side of the drive control circuit 10.

The Hout bridge circuit 6 includes two transistors Tr3 and Tr4, which are connected in series. A node between the transistors Tr3 and Tr4 forms an output terminal 31 of the Hout bridge circuit 6. The output terminal 31 of the Hout bridge circuit 6 is connected to the first motor terminal of the second motor M2. The transistors Tr3 and Tr4 are each an FET or the like. The transistor Tr3 may be referred to as the power supply (Vcc) side transistor. The transistor Tr4 may be referred to as the ground (GND) side transistor. The source terminal of the transistor Tr3 is connected to the power supply Vcc, the drain terminal of the transistor Tr3 is connected to the drain terminal of the transistor Tr4, and the gate terminal of the transistor Tr3 is connected to the input terminal side of the drive control circuit 10. The source terminal of the transistor Tr4 is connected to the GND, and the gate terminal of the transistor Tr4 is connected to the input terminal side of the drive control circuit 10.

The COM bridge circuit 7 includes two transistors Tr5 and Tr6 connected in series. A node between the transistors Tr5 and Tr6 forms an output terminal 32 of the COM bridge circuit 7. The output terminal 32 of the COM bridge circuit 7 is connected to the second motor terminals of the two motors M1 and M2. The transistors Tr5 and Tr6 are each an FET or the like. The transistor Tr5 may be referred to as the power supply (Vcc) side transistor. The transistor Tr6 may be referred to as the ground (GND) side transistor. The source terminal of the transistor Tr5 is connected to the power supply Vcc, the drain terminal of the transistor Tr5 is connected to the drain terminal of the transistor Tr6, and the gate terminal of the transistor Tr5 is connected to the input terminal side of the drive control circuit 10. The source terminal of the transistor Tr6 is connected to the GND, and the gate terminal of the transistor Tr6 is connected to the input terminal side of the drive control circuit 10.

In each of the bridge circuits 5, 6, and 7, when the power supply Vcc side transistors (Tr1, Tr3, and Tr5 in this example) are activated and the GND side transistors (Tr2, T4, Tr6 in this example) are deactivated, the bridge output enters an H state. In each of the bridge circuits 5, 6, and 7, when the power supply Vcc side transistors are deactivated and the GND side transistors are activated, the bridge output enters an L state. When the two transistors are both deactivated in each of the bridge circuits 5, 6, and 7, the bridge output enters an Hi-Z state (high impedance state).

Diodes Di1 to Di6 are respectively arranged in the transistors Tr1 to Tr6. The diodes Di1 to Di6 prevent the flow of reverse current to the transistors Tr1 to Tr6. The diodes Di1 to Di6 are connected in parallel with the corresponding transistors Tr1 to Tr6.

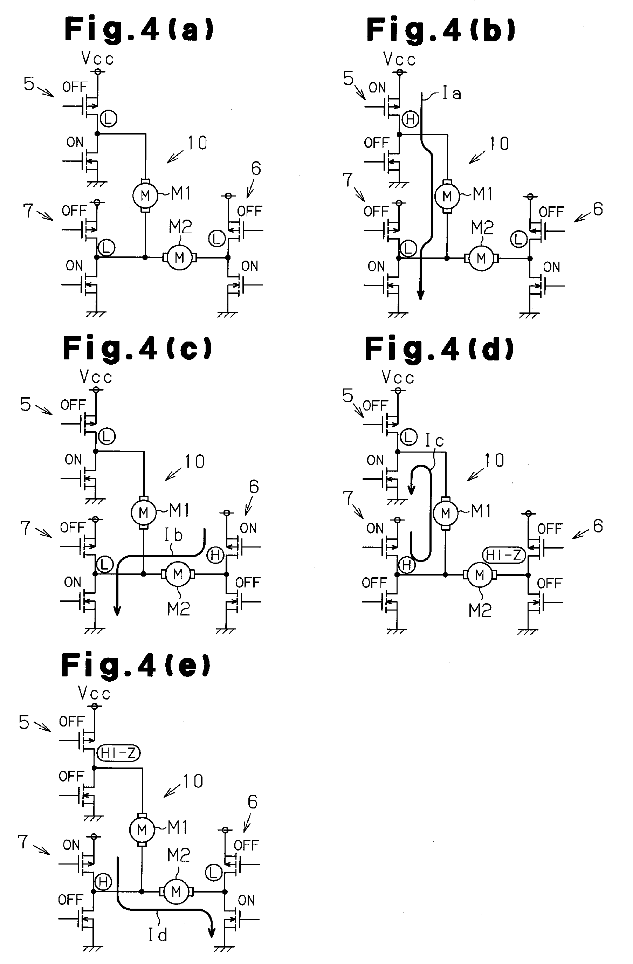

As shown in Fig. 4(a), when the three bridge circuits 5, 6, and 7 are in the L state, current does not flow to the two motors M1 and M2, and the motors M1 and M2 stop operating.

As shown in Fig. 4(b), when the Vout bridge circuit 5 is in the H state, the Hout bridge circuit 6 is in the L state, and the COM bridge circuit 7 is in the L state, a potential difference is generated between the motor terminals of the first motor M1. Thus, drive current Ia flows from the Vout bridge circuit 5 to the COM bridge circuit 7 through the first motor M1, and the first motor M1 produces forward rotation.

As shown in Fig. 4(c), when the Vout bridge circuit 5 is in the L state, the Hout bridge circuit 6 is in the H state, and the COM bridge circuit 7 is in the L state, a potential difference is generated between the motor terminals of the second motor M2. Thus, drive current Ib flows from the Hout bridge circuit 6 to the COM bridge circuit 7 through the second motor M2, and the second motor M2 produces forward rotation.

As shown in Fig. 4(d), when the Vout bridge circuit 5 is in the L state, the Hout bridge circuit 6 is in the Hi-Z state, and the COM bridge circuit 7 is in the H state, a reverse potential difference is generated between the motor terminals of the first motor M1. Thus, drive current Ic flows from the COM bridge circuit 7 to the Vout bridge circuit 5 through the first motor M1, and the first motor M1 produces reverse rotation.

As shown in Fig. 4(e), when the Vout bridge circuit 5 is in the Hi-Z state, the Hout bridge circuit 6 is in the L state, and the COM bridge circuit 7 is in the H state, a reverse potential difference is generated between the motor terminals of the second motor M2. Drive current Id flows from the COM bridge circuit 7 to the Hout bridge circuit 6 through the second motor M2, and the second motor M2 produces reverse rotation.

The system control circuit 9 stops operation, produces forward rotation, or produces reverse rotation with the motors M1 and M2 by combining the levels (H or L) of the motor control command signals S2a, S2b, and S2c.

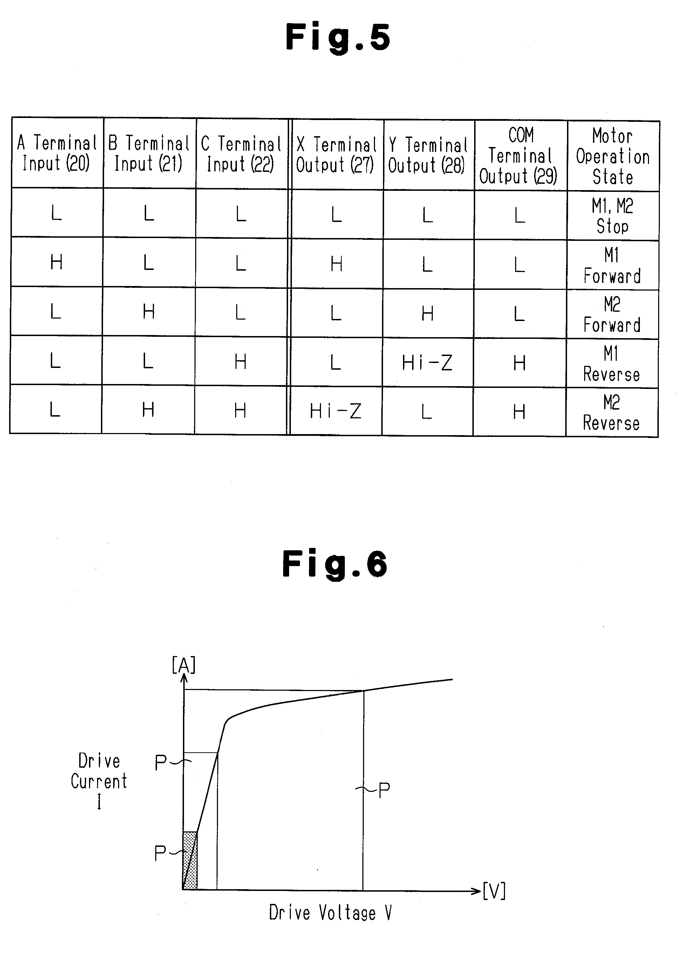

Specifically, as shown in Fig. 5, to stop operation of the two motors M1 and M2, the system control circuit 9 outputs to the drive control circuit 10 the motor control command S2 in which the combination of the levels of the motor control command signals S2a, S2b, and S2c is L, L, and L. To produce forward rotation with the first motor M1, the system control circuit 9 outputs the motor control command S2 in which the combination of the levels of the motor control command signals S2a, S2b, and S2c is H, L, and L to the drive control circuit 10. To produce forward rotation with the second motor M2, the system control circuit 9 outputs the motor control command S2 in which the combination of the levels of the motor control command signals S2a, S2b, and S2c is L, H, and L to the drive control circuit 10. To produce reverse rotation with the first motor M1, the system control circuit 9 outputs the motor control command S2 in which the combination of the levels of the motor control command signals S2a, S2b, and S2c is L, L, and H to the drive control circuit 10. When producing reverse rotation with the second motor M2, the system control circuit 9 outputs the motor control command S2 in which the combination of the levels of the motor control command signals S2a, S2b, and S2c is L, H, and H to the drive control circuit 10.

The drive control circuit 10 controls activation and deactivation of the transistors Tr1 to Tr6 in the bridge circuits 5, 6, and 7 according to the motor control command S2 received from the system control circuit 9. The combination of the levels of the output signals of the X terminal 27, Y terminal 28, and the COM terminal 29 changes according to the activation and deactivation combination of the transistors Tr1 to Tr6. The motors M1 and M2 produce forward rotation, reverse rotation, or stop operation according to the combination of the levels of the output signals.

For example, if the terminal inputs of the drive control circuit 10 are L, L, and L, the combination of the levels of the output signals of the X terminal 27, the Y terminal 28, and the COM terminal 29 of the drive control circuit 10 is L, L, and L, in which case the motors M1 and M2 both stop operating. If the terminal inputs of the drive control circuit 10 is H, L, and L), the combination of the levels of the output signals of the X terminal 27, the Y terminal 28, and the COM terminal 29 of the drive control circuit 10 is H, L, and L, in which case the first motor M1 produces forward rotation. If the terminal inputs of the drive control circuit 10 is L, H, and L, the combination of the levels of the output signals of the X terminal 27, the Y terminal 28, and the COM terminal 29 of the drive control circuit 10 is L, H, and L, in which case the second motor M2 produces forward rotation. If the terminal inputs of the drive control circuit 10 is L, L, and H, the combination of the levels of the output signals of the X terminal 27, the Y terminal 28, and the COM terminal 29 of the drive control circuit 10 is L, Hi-Z, and L, in which case the first motor M1 produces reverse rotation. If the terminal inputs of the drive control circuit 10 is L, H, and H, the combination of the levels of the output signals of the X terminal 27, the Y terminal 28, and the COM terminal 29 of the drive control circuit 10 is Hi-Z, L, H, in which case the second motor M2 produces reverse rotation.

The system control circuit 9 controls rotation produced by the first motor M1 and the second motor M2 by performing pulse width modulation (PWM) control for modulating a pulse signal Sp1 output to the drive control circuit 10. The PWM control includes changing the pulse width, interval, number, or combination thereof for the pulse signal Sp1, which is input as a rotation speed adjustment command to the drive control circuit 10. The ratio of the ON time and OFF time of the switch element group (Tr1 to Tr6) in the drive control circuit 10 is changed, and the voltage applied to the first motor M1 and the second motor M2 is changed according to the pulse signal Sp1. The motors M1 and M2 may be driven at a speed optimal for changing the orientation of the mirror surface 3 of the door mirror 2 by using the PWM control.

The motor drive circuit 8 implements a protection function for protecting the drive control circuit 10 from an abnormal state such as overcurrent. The protection function provides heat protection for protecting the drive control circuit 10 from overheating, overcurrent protection for preventing overcurrent from flowing to the drive control circuit 10, and an overpower protection for protecting the drive control circuit 10 from overpower. This prevents the occurrence of a situation in which the rated heat generation value (heat generation resistance value), rated current value, or rated power value of the drive control circuit 10 (motor drive circuit 8) is exceeded. Thus, the infliction of damages to the drive control circuit 10 (motor drive circuit 8) is prevented.

The timings during implementation of the protection function will now be described.

The virtual voltage V of the drive control circuit 10 is directly determined by the flow of the drive current I to the drive control circuit 10. As apparent from a current-voltage characteristic curve shown in Fig. 6, the rate of current increase is greater than the rate of voltage increase (i.e., the inclination of the characteristic curve of Fig. 6 is large) when the current I starts to flow (when current I is relatively small). The rate of voltage increase becomes greater than the rate of current increase (i.e., the inclination of the characteristic curve of Fig. 6 is small) from a predetermined point. The power consumption P of the drive control circuit 10 is calculated by multiplying the drive current I and the drive voltage V at a given time. Detection of the current I flowing to the drive control circuit 10 enables determination of the drive control circuit 10 (motor drive circuit 8) being in a heated state, overcurrent state, or overpower state. The timings for initiating heat protection control, overcurrent protection control, and overpower protection control can be determined based on the monitoring result of the current flowing to the drive control circuit 10.

As shown in Fig. 3, the drive control circuit 10 includes current detection transistors Cs1 to Cs6, which respectively detect the current flowing to the transistors Tr1 to Tr6, and a current detection circuit 34, which is connected to the current detection transistors Cs1 to Cs6. The current detection circuit 34 determines the amount of current flowing to the transistors Tr1 to Tr6 based on the detection signal provided from the current detection transistors Cs1 to Cs6. Each of the transistors Cs1 to Cs6 is a sense MOSFET or the like. The set of current detection transistors Cs1, Cs3, and Cs5 associated with the power supply side transistors Tr1, Tr3, and Tr5 are connected to one another to form a wire-connected unit. The set of current detection transistors Cs2, Cs4, and Cs6 associated with the GND side transistors Tr2, Tr4, and Tr6 are connected to one another to form a wire-connected unit. Each line-connected unit is connected to the current detection circuit 34.

The current detection circuit 34 is hardware that is incorporated in the drive control circuit 10. The current detection circuit 34 includes an input terminal, which is connected to the current detection transistors Cs1 to Cs6, and an output terminal, which is connected to the system control circuit 9. The current detection circuit 34 calculates the amount of current flowing to the drive control circuit 10 based on the detection signal obtained from each line-connected unit of the current detection transistors Cs1 to Cs6 and determines whether or not to implement a protection function.

When executing the protection function, the current detection circuit 34 determines (selects) the protection function that is to be implemented. The current detection circuit 34 determines the protection function that is to be implemented based on the rising of the drive current I, generates a protection function implementation request signal Sng in correspondence with the protection function that is to be executed. Then, the current detection circuit 34 outputs the signal Sng to the system control circuit 9 via the diagnostic line L3. The protection function implementation request signal Sng is a notification signal determined by the combination of the levels of H and L of the diagnosis notification signal S3a flowing through the first diagnostic line L3a, the diagnosis notification signal S3b flowing through the second diagnostic line L3b, the diagnosis notification signal S3c flowing through the third diagnostic line L3c, and the diagnosis notification signal S3d flowing through the fourth diagnostic line L3d.

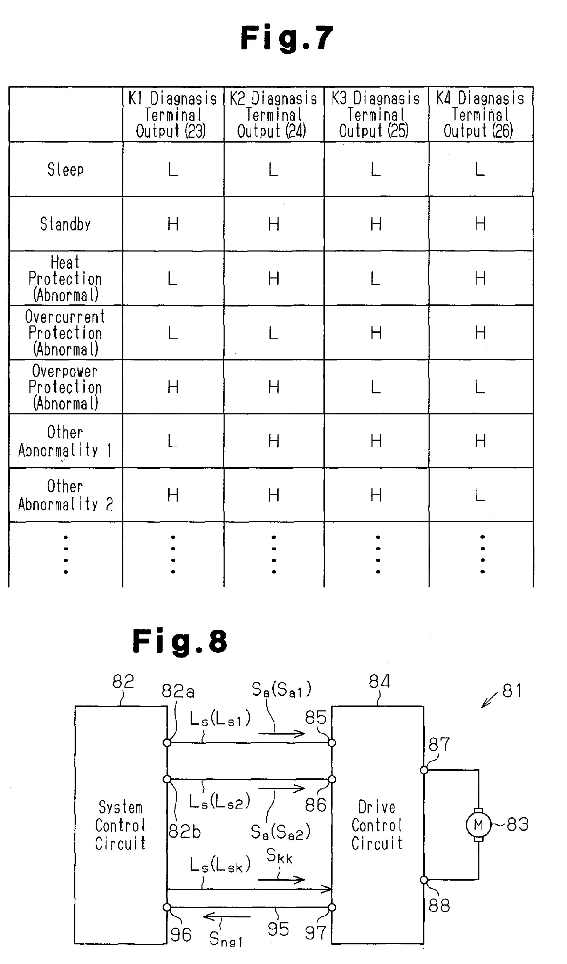

For example, the current detection circuit 34 determines that the heat protection is to be implemented as the protection function when the calculated amount of current becomes greater than a heat protection threshold value K1. Then, the current detection circuit 34 outputs the diagnosis notification S3 for notifying the system control circuit 9 of the heat protection. The diagnosis notification S3 notifying that the heat protection is formed by the protection function implementation request signal Sng of which signal combination (S3a, S3b, S3c, S3d) shown in Fig. 7 is L, H, L, and H. When receiving the protection function implementation request signal Sng having a signal combination of L, H, L, and H, the system control circuit 9 generates the pulse signal Sp1 having a relatively small first pulse width through PWM control, provides the generated pulse signal Sp1 to the drive control circuit 10, reduces the drive current I flowing to the motors M1 and M2, and reduces the heat of the drive control circuit 10.

The current detection circuit 34 determines that the overcurrent protection is to be implemented as the protection function when the calculated amount of current becomes greater than an overcurrent threshold value K2 (K2>K1). Then, the current detection circuit 34 outputs the diagnosis notification S3 for notifying the system control circuit 9 of the overcurrent protection. The diagnosis notification S3 notifying that the overcurrent protection is the protection function implementation request signal Sng of which signal combination (S3a, S3b, S3c, S3d) shown in Fig. 7 is L, L, H, and H. When receiving the protection function implementation request signal Sng having a signal combination of L, L, H, and H, the system control circuit 9 determines that the heat protection is inappropriate for resolving the overcurrent flow state, generates the pulse signal Sp1 having a second pulse width that smaller than the first pulse width through PWM control, provides the generated pulse signal Sp1 to the drive control circuit 10, and further reduces the drive current I flowing to the motors M1 and M2.

The current detection circuit 34 determines that the overpower protection is to be implemented as the protection function when the calculated amount of current becomes greater than an overpower threshold value K3 (K3>K2), and outputs the diagnosis notification S3 notifying overpower protection to the system control circuit 9. The diagnosis notification S3 notifying the overpower protection is the protection function implementation request signal Sng in which the signal combination (S3a, S3b, S3c, S3d) shown in Fig. 7 is H, H, L, and L. When receiving the protection function implementation request signal Sng having a signal combination of H, H, L, and L, the system control circuit 9 determines that the heat protection and the overcurrent protection are inappropriate for resolving the overpower state, stops providing the pulse signal Sp1 to the drive control circuit 10, and stops the flow of the drive current I to the motor drive circuit 8.

As shown in Fig. 7, the motor drive circuit 8 may output to the system control circuit 9 a signal combination of L, H, and H or H or H, L, L, and L indicating an abnormality of the motor drive circuit 8.

The diagnostic line failure detection function will now be described.

The motor drive circuit 8 has a diagnostic line failure detection function for detecting a failure in the diagnostic line L3 (include diagnosis terminals 15 to 18 and 23 to 26). The diagnostic line failure function is one type of protection function that tests whether all (four in this example) diagnostic lines L3a to L3d are in an H state or an L state when driving and producing rotation with the motors M1 and M2 to detect a failure in the diagnostic lines L3a to L3d. If one or more diagnostic lines L3a to L3d does not enter at least either one of an H state or a L state, the system control circuit 9 determines that the diagnostic lines L3a to L3d includes an abnormality and forcibly stops the driving of the motor drive circuit 8.

The diagnostic line failure detection function will now be described in detail. As shown in Fig. 2, the drive control circuit 10 includes a signal output unit 36 for outputting a diagnostic output formed by a predetermined combination of signals when driving and controlling the motors M1 and M2. At the point of time when the drive control circuit 10 receives the activation request with the mode terminal 19 and enters the sleep mode (first operation state, stop operation state), the signal output unit 36 outputs a diagnosis check notification Sk1 in which an output combination (S3a, S3b, S3c, S3d) is L, L, L, and L to the system control circuit 9 as the diagnosis notification S3. At the point of time when the drive control circuit 10 receives the standby request with the mode terminal 19 and enters the standby mode (second operation state, standby operation state), the signal output unit 36 outputs a diagnosis check notification Sk2 in which the output combination (S3a, S3b, S3c, S3d) is H, H, H, and H to the system control circuit 9 as the diagnosis notification S3. The signal output unit 36 is non-limited example of a signal output means.

The system control circuit 9 includes a diagnostic line failure determination unit 37 for monitoring the wiring output of the diagnostic line L3 and determining a diagnostic line failure. In response to the activation request provided from the system control circuit 9 to the drive control circuit 10, the diagnostic line failure determination unit 37 checks whether the diagnosis check notification Sk1 received from the drive control circuit 10 via the diagnostic line L3 has a normal value, that is, whether all the diagnosis notification signals S3a, S3b, S3c, and S3d have an L level. In response to the standby request provided from the system control circuit 9 to the drive control circuit 10, the diagnostic line failure determination unit 37 checks whether the diagnosis check notification Sk2 received from the drive control circuit 10 via the diagnostic line L3 has a normal value, that is, whether all the diagnosis notification signals S3a, S3b, S3c, and S3d have an H level. The diagnostic line failure determination unit 37 recognizes that the diagnostic line L3 has a failure when the notifications Sk1 and Sk2 both do not have normal values, that is, when at least one of the levels of the diagnosis notification signals S3a, S3b, S3c, and S3d is inverted. In such a case, the diagnostic line failure determination unit 37 forcibly stops the operation of the motor drive circuit 8. The diagnostic line failure determination unit 37 is non-limited example of a determination unit.

The operation of the motor drive circuit 8 will now be described.

If the engine start switch is at the OFF position in a state in which the system control circuit 9 (motor drive circuit 8) is supplied with power, the system control circuit 9 outputs the activation request to the drive control circuit 10 via the operation control line L1. The drive control circuit 10 is in the sleep mode during the period in which the activation request is being received at the mode terminal 19. In the sleep mode, the drive control circuit 10 outputs via the diagnostic lines L3a to L3d to the system control circuit 9 the diagnosis check notification Sk1, which is formed by a combination of diagnosis notification signals S3a, S3b, and S3d all having L levels. The system control circuit 9 reads the signal combination of the diagnosis check notification Sk1 received from the drive control circuit 10.

The system control circuit 9 outputs the standby request to the drive control circuit 10 via the operation control line L1 when detecting that the engine start switch has been operated and arranged at the ACC position or the IG ON position. The drive control circuit 10 enters the standby mode when receiving the standby request at the mode terminal 19. Then, the drive control circuit 10 outputs via the diagnostic lines L3a to L3d to the system control circuit 9 the diagnosis check notification Sk2, which is formed by a combination of the diagnosis notification signals S3a, S3b, and S3d all having H levels. The system control circuit 9 reads the signal combination of the diagnosis check notification Sk2.

The system control circuit 9 determines whether there is a diagnostic line failure during the process for shifting the drive control circuit 10 to the sleep mode and the standby mode. More specifically, the system control circuit 9 checks whether or not the diagnosis check notification Sk1 returned from the drive control circuit 10 in response to the activation request is formed by a signal combination of all L levels. Alternatively, the system control circuit 9 checks whether or not the diagnosis check notification Sk2 returned from the drive control circuit 10 in response to the standby request is formed by a signal combination of all H levels. When recognizing that the diagnosis check notification Sk1 has the signal combination of all L levels and the diagnosis check notification Sk2 has the signal combination of all H levels, the system control circuit 9 determines that the diagnostic lines L3a to L3d (including diagnosis terminals 15 to 18, 23 and 26) are functioning normally and continues the angle adjustment operation of the mirror surface 3. When detecting operation of the mirror surface angle adjustment switch 4, the system control circuit 9 that has shifted the drive control circuit 10 to the standby mode outputs the motor control command S2 of which signal combination corresponds to the switch operation to the drive control circuit 10. As a result, the drive control circuit drives the motors M1 and M2 to produce forward rotation or reverse rotation and adjust the orientation of the mirror surface 3.

To tilt the mirror surface 3 of the door mirror 2 rightward, the operator performs a rightward tilt request operation with the mirror surface angle adjustment switch 4, which is arranged in the vehicle. In non-limited example, the first motor M1 must produce forward rotation to tilt the mirror surface 3 rightward. In such a case, the system control circuit 9 outputs to the drive control circuit 10 via the motor control lines L2a to L2c the motor control command S2 of which signal combination (S2a, S2b, and S2c) is H, L, and L as shown in Fig. 5. In accordance with the motor control command S2, the Vout bridge circuit 5 enters the H state, and the remaining two bridge circuits 6 and 7 enter the L state. The output combination of the X terminal 27, the Y terminal 28, and the COM terminal 29 of the drive control circuit 10 is H, L, and L. A potential difference is produced between the motor terminals of the first motor M1. However, a potential difference is not produced between the motor terminals of the second motor M2. Thus, the drive current Ia directed from the Hout bridge circuit 6 to the COM bridge circuit 7 flows to the first motor M1. As a result, the first motor M1 produces forward rotation, and the mirror surface 3 of the door mirror 2 tilts rightward.

When detecting that the mirror surface angle adjustment switch 4 is no longer being operated during the forward rotation operation of the first motor M1, the system control circuit 9 outputs the motor control command S2 of which signal combination S2a, S2b, and S2c is L, L, and L to the drive control circuit 10 to stop operation of the first motor M1. The bridge circuits 5, 6, and 7 all enter the L state. This brakes the forward rotation of the first motor M1 and stops the first motor M1. In this manner, the driving of the mirror surface 3 stops at the timing the operator stops the right tilt operation with the mirror surface angle adjustment switch 4.

To tilt the mirror surface 3 of the door mirror 2 leftward, the operator performs a leftward tilt request operation with the mirror surface angle adjustment switch 4. In non-limited example, the first motor M1 must produce reverse rotation to tilt the mirror surface 3 leftward. The system control circuit 9 outputs to the drive control circuit 10 via the motor control lines L2a to L2c the motor control command S2 of which signal combination (S2a, S2b, and S2c) is L, L, and H, as shown in Fig. 5. In accordance with the motor control command S2, the Vout bridge circuit 5 enters the L state, the Hout bridge circuit 6 enters the Hi-Z state, and the COM bridge circuit 7 enters the H state. The output combination of the X terminal 27, the Y terminal 28, and the COM terminal 29 of the drive control circuit 10 is L, Hi-Z, and H. A potential difference is produced between the motor terminals of the first motor M1. However, a current path is not formed in the motor circuit of the second motor M2. Thus, the drive current Ic directed from the COM bridge circuit 7 to the Vout bridge circuit 5 flows to the first motor M1. In this manner, when the mirror surface angle adjustment switch 4 is undergoing the leftward tilt request operation, only the first motor M1 produces reverse rotation so that the mirror surface 3 of the door mirror 2 tilts leftward.

To tilt the mirror surface 3 of the door mirror 2 upward, the operator performs an upward tilt request operation with the mirror surface angle adjustment switch 4. In non-limited example, the second motor M must produce forward rotation to tilt the mirror surface 3 upward. The system control circuit 9 outputs to the drive control circuit 10 via the motor control lines L2a to L2c the motor control command S2 of which signal combination (S2a, S2b, S2c) is L, H, and L, as shown in Fig. 5. Then, the Hout bridge circuit 6 enters the H state, and the two remaining bridge circuits 5 and 7 enter the L state. The output combination of the X terminal 27, the Y terminal 28, and the COM terminal 29 of the drive control circuit 10 is L, H, and L. A potential difference is produced between the motor terminals of the second motor M2. However, a potential difference is not produced between the motor terminals of the first motor M1. Thus, the drive current Ib directed from the Hout bridge circuit 6 to the COM bridge circuit 7 flows to the second motor M2. In this manner, when the mirror surface angle adjustment switch 4 is undergoing the upward tilt request operation, the second motor M2 produces forward rotation so that the mirror surface 3 of the door mirror 2 tilts upward.

To tilt the mirror surface 3 of the door mirror 2 downward, the operator performs a downward tilt request operation with the mirror surface angle adjustment switch 4. In non-limited example, the second motor M2 must produce reverse rotation to tilt the mirror surface 3 downward. The system control circuit 9 outputs to the drive control circuit 10 via the motor control lines L2a to L2c the motor control command S2 of which signal combination (S2a, S2b, S2c) is L, H, and H, as shown in Fig. 5. Then, the Vout bridge circuit 5 enters the Hi-Z state, the Hout bridge circuit 6 enters the L state, and the COM bridge circuit 7 enters the H state. The output combination of the X terminal 27, the Y terminal 28, and the COM terminal 29 of the drive control circuit 10 is Hi-Z, L, and H. A potential difference is produced between the motor terminals of the second motor M2. However, a current path is not formed in the motor circuit of the first motor M1. Thus, the drive current Id directed from the COM bridge circuit 7 to the Hout bridge circuit 6 flows to the second motor M2. In this manner, when the mirror surface angle adjustment switch 4 is undergoing the downward tilt request operation, the second motor M2 produces reverse rotation so that the mirror surface 3 of the door mirror 2 tilts downward.

The system control circuit 9 checks the signal combination representing the diagnosis check notification (Sk1, Sk2) that is returned via the diagnostic lines L3a to L3d from the drive control circuit 10 in response to the operation control command S1 (activation request, standby request) output to the drive control circuit 10. If at least either one of the diagnosis check notification Sk1, which is received when the drive control circuit 10 is in the sleep mode, and the diagnosis check notification Sk2, which is received when the drive control circuit 10 is in the standby state, does not have a normal value, the system control circuit 9 determines that the diagnostic lines L3a to L3d (diagnosis terminals 15 to 18, 23 to 26) are abnormal and include a failure. If the diagnostic lines L3a to L3d include a failure, it is assumed that the diagnostic output will be fixed in the H state or the L state. Under such a situation, the signal level of an abnormal diagnostic line can be only either one of H and L. Thus, the diagnostic output cannot establish an all L-output state or an all H-output state. Accordingly, the system control circuit 9 recognizes that the diagnostic lines L3a to L3d include a failure when recognizing that the diagnosis check notification Sk1, which is obtained from the drive control circuit 10 in the sleep mode, is not in the signal combination of all L levels or when recognizing that the diagnosis check notification Sk2, which is obtained from the drive control circuit 10 in the standby mode, is not in the signal combination of all H levels.

When recognizing a failure in the diagnostic line L3, the system control circuit 9 forcibly stops the motors M1 and M2 and keeps the motors M1 and M2 is this state without outputting the motor control command S2 to the drive control circuit 10. When recognizing a failure in the diagnostic line L3, the system control circuit 9 visually indicates the failure of the door mirror 2 on a display arranged on an instrument panel in the passenger compartment. Alternatively, the system control circuit 9 generates an audible alarm sound from a speaker arranged in the passenger compartment to notify the vehicle driver of a failure. When detecting that the engine start switch has been operated to the OFF position, the system control circuit 9 cancels the state in which the motor drive circuit 8 is forcibly stopping operation of the motors M1 and M2 and returns the motor drive circuit 8 to its original state.

As described above, in the preferred embodiment, the drive control circuit 10 outputs to the system control circuit 9 the diagnosis check notification Sk1, that is, a diagnostic output of which signal combination is all L level (L, L, L, and L) when entering the sleep mode. The drive control circuit 10 outputs to the system control circuit 9 the diagnosis check notification Sk2, that is, a diagnostic output of which signal combination is all H level (H, H, H, and H) when entering the standby mode. The system control circuit 9 determines that diagnostic lines L3a to L3d are abnormal, or includes a failure, when the diagnostic output can have be both an H level signal and an L level signal without any problem. The motors M1 and M2 are prevented from producing rotation when the diagnostic lines L3a to L3d include a failure. This prevents the motors M1 and M2 from being erroneously operated by an erroneous diagnostic output.

The preferred embodiment has the advantages described below.
(1) When in or shifting to the sleep mode, the drive control circuit 10 outputs to the system control circuit 9 via all the diagnostic lines the diagnosis check notification Sk1 that is formed by signals all having an L level (L, L, L, and L). When in the standby mode, the drive control circuit 10 outputs to the system control circuit 9 via all the diagnostic lines the diagnosis check notification Sk2 that is formed by signals all having an H level H, H, H, and H. The system control circuit 9 checks whether the two notifications Sk1 and Sk2 have normal values to determine whether the diagnostic lines L3a to L3d are functioning normally. If the diagnosis check notification Sk1 does not have a signal combination of all L levels or the diagnosis check notification Sk2 does not have the signal combination of all H levels, the system control circuit 9 recognizes that the diagnostic lines L3a to L3d includes a failure and accordingly performs an operation such as forcibly ending the operation of the motor drive circuit 8. This prevents the motors M1 and M2 from being driven to produce rotation when the diagnostic lines L3a to L3d are abnormal. Thus, erroneous operation of the motors M1 and M2 that would be caused by a failure in a diagnostic line does not occur.
(2) A failure in the diagnostic lines L3a to L3d is determined using a diagnostic line failure determination output when the drive control circuit 10 is in or shifting to a first state such as a sleep mode and another diagnostic line failure determination output when the drive control circuit 10 is in a second state such as a standby mode after the sleep mode. The determination of whether the diagnostic lines L3a to L3d include a failure is completed at the point of time when the motors M1 and M2 actually produce rotation. This prevents the occurrence of a situation in which the motors M1 and M2 produce rotation when the diagnostic lines L3a to L3d are abnormal.
(3) The diagnosis check notification Sk1 output to the system control circuit 9 when the drive control circuit 10 is in or shifting to the first state such as the sleep mode is a diagnostic output formed by a signal combination of all L levels (L, L, L, and L), and the diagnosis check notification Sk2 output to the system control circuit 9 when the drive control circuit 10 is in or shifting to the second state such as the standby mode is a diagnostic output formed by a signal combination of all H levels (H, H, H, and H). The system control circuit 9 performs a diagnostic line failure determination through a simple process of just checking whether the diagnostic output received from the drive control circuit 10 is in a signal combination of all L levels or all H levels.
(4) The rotation produced by the motors M1 and M2 is controlled by executing PWM control. The PWM control is advantageous in that it has a desirable energy conversion rate for switching control and in that the switching control is simple.
(5) When stopping both of the first motor M1 and the second motor M2, the outputs of the three bridge circuits 5 to 7 are all in the L state. The terminals of the motors M1 and M2 are not in a high potential state when the motors M1 and M2 are stopped as when executing a control to stop the motors M1 and M2 with the three bridge circuits 5, 6, 7 in an H state. This provides superior stability.
(6) In the preferred, a common bridge scheme in which the two motors M1 and M2 common share the single bridge circuit 7 is employed. This decreases the number of bridge circuits, reduces the size of the circuits 8 and 10, and lowers cost of the components.

It should be apparent to those skilled in the art that the present invention may be embodied in many other specific forms without departing from the spirit or scope of the invention. Particularly, it should be understood that the present invention may be embodied in the following forms.

The diagnostic output (diagnosis check notifications Sk1 and Sk2) output to the system control circuit 9 for the diagnostic line failure determination by the drive control circuit 10 is not limited to the signal combination in which the diagnostic line outputs are all in the L state or all in the H state. The signal combination can be changed as required.

The timing the drive control circuit 10 outputs as diagnostic output for diagnostic line failure determination to the system control circuit 9 may differ from the timing of the preferred embodiment. For example, the diagnostic line failure determination may be performed at timings when the drive control circuit 10 is in the standby state and when the drive control circuit 10 is actually controlling and producing rotation with the motors M1 and M2 (the first state is the standby mode and the second state is the actual drive state, or vice versa). Alternatively, the diagnostic line failure determination may be performed when actually driving the motors M1 and M2 (forward rotation, reverse rotation). Alternatively, the first state may be the standby mode and the second state may be the sleep mode.

The operation performed by the system control circuit 9 when recognizing a failure in the diagnostic lines L3a to L3d merely needs to protect the motor drive circuit 8 from the state of failure. Such an operation is not limited to forcibly stopping the operation of the motor drive circuit 8, visually indicating such notification on the display of an instrument panel, or generating an audible notification through a speaker arranged in the passenger compartment.

The combination of levels of the signals forming the motor control command S2 is not limited to that shown in Fig. 5 and may be set as required.

The number of motor control lines L2 is not limited to three and may be changed in accordance with the number of bits necessary for the motor control command S2.

The load is not limited to the motors M1 and M2 and may be a lamp or the like.

The semiconductor element in the drive control circuit 10 is not limited to an FET (transistors Tr1 to Tr6), and may be various types of switching elements such as a transistor.

The PWM control does not have to be employed to control rotation produced by motors M1 and M2. Other types of pulse control may be employed.

The motor drive circuit 8 does not have to drive and control two motors with three bridge circuits. In a plurality of motors, the first motor terminal may each be connected to different bridge circuits and the second motor terminals may be connected to a common bridge circuit to drive and control the plurality of motors. Further, the motor drive circuit 8 does not have to include a common bridge circuit and may include a bridge circuit for each motor terminal.

The motor drive circuit 8 does not have to be used in a drive mechanism that changes the orientation of the mirror surface 3 of the door mirror 2 and may be used in various types of devices that use a motor as a drive source.

The present examples and embodiments are to be considered as illustrative and not restrictive, and the invention is not to be limited to the details given herein, but may be modified within the scope and equivalence of the appended claims.

## Claims

1. A load drive control circuit (8) for use with a load, the load drive circuit comprising:
a drive circuit (10) for connection to the load for driving the load; and
a control circuit (9), connected to the drive circuit by a plurality of diagnostic lines (L3a - L3d), for providing the drive circuit with a control command (S1) that specifies an operation state of the drive circuit;
wherein the drive circuit has a plurality of operation states including a first operation state and a second operation state;
the control command includes a first control command for specifying the first operation state and a second control command for specifying the second operation state;
the drive circuit drives the load in the operation state specified by the control command;
the drive circuit generates a diagnostic output (Sk1, Sk2) including a plurality of diagnostic notification signals (S3a - S3d) each having an H level or an L level, and provides the plurality of diagnostic notification signals of the diagnostic output to the control circuit via the plurality of diagnostic lines; and
the control circuit, when receiving a diagnostic output indicating abnormality of the drive circuit from the drive circuit, performs an operation corresponding to the abnormality;
the load drive circuit further comprising:
a signal output unit (36) for outputting a first diagnostic output and a second diagnostic output respectively in response to the first control command and the second control command from the control circuit, with the plurality of diagnostic notification signals all having H levels in either one of the first and second diagnostic outputs and the plurality of diagnostic notification signals all having L levels in the other one of the first and second diagnostic output; and
a determination unit (37) for checking whether the first diagnostic output provided from the signal output unit when the drive circuit is in the first operation state and the second diagnostic output provided from the signal output unit when the drive circuit is in the second operation state are both normal to determine whether the plurality of diagnostic lines includes a failure or not.

2. The load drive control circuit according to claim 1, wherein
the plurality of operation states include a hibernation state and a standby state, wherein the drive circuit is operated in the standby state before actually driving the load;
the signal output unit provides the determination unit with the first diagnostic output in which the plurality of diagnostic notification signals all have the same level when the drive circuit is in the hibernation state in response to the first control command specifying the hibernation state; and
the signal output unit provides the determination unit with the second diagnostic output in which the plurality of diagnostic notification signals have a level opposite to the level of the first diagnostic output when the drive circuit is in the standby state in response to the second control command specifying the standby state.

3. The load drive control circuit according to claim 1, wherein the first operation state of the drive circuit is a hibernation state, the second operation state of the derive circuit is a standby state, with the plurality of diagnostic notification signals of the first diagnostic output all having an L level, and the plurality of diagnostic notification signals of the second diagnostic output all having an H level.

4. The load drive control circuit according to claim 1, wherein:
the drive circuit includes a plurality of bridge circuits, with each bridge circuit including two series-connected semiconductor elements, and an output terminal arranged between the two semiconductor elements and connected to a connection terminal of the load;
each output terminal changes its bridge output in accordance with a combination of how the two semiconductor elements in the corresponding bridge circuit are combined in an activated state and deactivated state; and
the drive control circuit switches the load to a different state by changing the combination of the bridge outputs from the plurality of bridge circuits based on a load control command received from the control circuit.

5. The load drive control circuit according to claim 4, wherein:
the load is one of a plurality of loads; and
the plurality of loads each have a first terminal and a second terminal, with the first terminals of the plurality of loads being for common connection to one of the bridge circuits and the second terminals of the plurality of loads being respectively for connection to the remaining bridge circuits.

6. The load drive control circuit according to claim 5, wherein the control circuit outputs a pulse signal to each bridge circuit in the drive circuit and controls switching of each of the semiconductor element in the bridge circuit.

7. The load drive control circuit according to claim 1, wherein the signal output unit is arranged in the drive circuit, and the determination unit is arranged in the control circuit.
